Europäisches Patentamt

(19) European Patent Office  (11) Veröffentlichungsnummer: **0 026 270**
**B1**
Office européen des brevets

(12) **EUROPÄISCHE PATENTSCHRIFT**

(45) Veröffentlichungstag der Patentschrift: (51) Int. Cl.³: **B 01 D 23/20**
**29.12.82**

(21) Anmeldenummer: **80103776.3**

(22) Anmeldetag: **03.07.80**

(54) **Rückspülbares Filter.**

(30) Priorität: **23.08.79 DE 2934117**          (73) Patentinhaber: **WABAG Wasserreinigungsbau Alfred**
**Kretzschmar GmbH & Co. KG,**
**Postfach 2049 Lichtenfelser Strasse 53,**
**D-8650 Kulmbach (DE)**

(43) Veröffentlichungstag der Anmeldung:
**08.04.81 Patentblatt 81/14**
                                              (72) Erfinder: **Kretzschmar, Wolfgang, Kesselweg 27,**
                                              **D-8650 Kulmbach (DE)**

(45) Bekanntmachung des Hinweises auf die Patenterteilung:
**29.12.82 Patentblatt 82/52**

                                              (74) Vertreter: **Planker, Karl-Josef, Dipl.-Phys., c/o**
                                              **BABCOCK-BSH AKTIENGESELLSCHAFT**
(84) Benannte Vertragsstaaten:                   **Postfach 4 + 6, D-4150 Krefeld 11 (DE)**
**DE FR IT NL**

(56) Entgegenhaltungen:
**CH-A-232 136**
**DE-C-646 403**
**DE-C-646 476**
**DE-U-7 030 627**
**DK-C-23 155**
**GB-A-1 261 320**

## Rückspülbares Filter

Die Erfindung betrifft ein rückspülbares Filter gemäß dem Oberbegriff des Patentanspruchs 1.

Bei derartigen Filtern haben die Filterdüsen eine zweifache Aufgabe: Während der Filtration dienen sie zur Ableitung des gefilterten Wassers in den Filtratraum, verhindern jedoch den Durchtritt des Filtermaterials. Bei der Rückspülung dienen sie dazu, das Filterbett von unten mit einem kräftigen Wasserstrom oder auch mit einem Gemisch aus Wasser und Druckluft gleichmäßig zu beaufschlagen. Auf diese Weise wird das Filterbett aufgelockert, und die Verunreinigungen, die sich nach einer gewissen Durchsatzmenge in dem Filterbett angesammelt haben, werden abgelöst und mit dem Spülwasser ausgetragen. Die Wassermengen für die Rückspülung richten sich nach der Korngröße des Filtermaterials. Je größer das Korn, desto höher muß die Wassermenge sein. Denn die Wassergeschwindigkeit beim Rückspülstoß muß größer sein als die Sinkgeschwindigkeit der Körner, die bekanntlich mit zunehmender Korngröße zunimmt. Waren noch vor einem Jahrzehnt Rückspülmengen von 12 m³/m² × h die Norm, so sind heute schon vielfach bis zu 80 m³/m² × h erforderlich.

Ein Filter der eingangs angegebenen Gattung ist durch die DE-U-7 030 627 bekannt. Bei diesem Filter befinden sich unter den Düsenhauben mehrere, nach der Zeichnung relativ kurze Kanäle mit nach unten gerichteten Austrittsöffnungen. Eine eindeutige Relation zwischen den Abmessungen der Düse und der Korngröße des umgebenden Filtermaterials ist der Druckschrift nicht zu entnehmen. Offenbar muß jedoch entweder die Höhe des Ringspaltes oder die Weite der Austrittsöffnungen, die ausdrücklich als »schmal« bezeichnet sind, kleiner sein als der kleinste Korndurchmesser. Denn sonst dürfte es sich bei den im Filterbetrieb üblichen Strömungsgeschwindigkeiten nicht vermeiden lassen, daß Körner mitgerissen werden und ins Filtrat gelangen.

Ein anderes gattungsgleiches Filter ist durch die DE-C-919 408 bekannt. Hierbei ist der Ringspalt verstellbar. Eine Verstellung darf aber nur bis maximal zum kleinsten Korndurchmesser des anliegenden Filtermaterials erfolgen, um das Eindringen von Filterkörnern in den Filtratraum zu vermeiden. Denn ein Filterkorn, das durch den Ringspalt in das Innere der Düse gelangt, kann in den Filtratraum mitgerissen werden, da wegen des engen Strömungsquerschnitts innerhalb der Düse die Strömungsgeschwindigkeit dort sehr hoch ist. Das Zusatzpatent DE-C-924 688 bestätigt, daß es sehr wichtig ist, den Ringspalt eng zu halten. Wie es in dem Zusatzpatent ausdrücklich heißt, kann es bei derartigen Düsen vorkommen, daß mit Rücksicht auf die sehr kleine Körnung des Filtermaterials der einstellbare Spalt so klein gehalten werden muß, daß der Durchflußwiderstand sehr groß wird. Diesem Nachteil will das Zusatzpatent dadurch abhelfen, daß man im Düsenmantel zusätzliche Schlitze anbringt, deren Breite von vorneherein so klein ist, daß keine Gefahr besteht, daß Filtermaterial in dieselben eindringen kann.

Bei der Verwendung von Düsen mit engen Ringspalten und/oder engen Schlitzen, wie z. B. auch bei der Düse gemäß DE-C-1 044 037, haben sich folgende Nachteile ergeben:

1. Die Spalte oder Schlitze können sich bei dem Filtrationsvorgang mit den abzufiltrierenden Stoffen zusetzen, insbesondere wenn die Ausscheidungsvorgänge mit Hilfe der Katalyse ablaufen.
2. Bei der Filtration von biologisch aktivem Wasser (kommunales Abwasser) setzen sich die Spalte oder Schlitze mit Schleimbakterien zu.
3. Bei der Rückspülung mit hohen Wassermengen erzeugen die feinen Spalte oder Schlitze einen unverhältnismäßig hohen Druckverlust.
4. Obwohl in vielen Fällen ungereinigtes Rohwasser für die Rückspülung des verschlammten Filters benutzt werden könnte, muß bei Verwendung derartiger Düsen immer filtriertes Reinwasser hierfür in Anspruch genommen werden, weil die zum Teil recht groben Verunreinigungen des unfiltrierten Rohwassers die Spalte oder Schlitze zusetzen.

Trotz dieser allgemein bekannten Nachteile wurde die Fachwelt offenbar durch ein Vorurteil davon abgehalten, den Ringspalt größer zu bemessen als den Korndurchmesser des anliegenden Materials. Dies wird auch deutlich durch »Taschenbuch für das Gas- und Wasserfach«, III, Zentrale Wasserversorgung, München 1963, Seite 215. Bei der dort dargestellten Düse ist zwar ein relativ großer Ringspalt vorgesehen. Jedoch liegt in diesem Falle über dem Filterboden eine Stützschicht von 20 bis 30 cm Höhe, deren Korngröße den Übergang von der Düsenschlitzweite zum Filterkorndurchmesser bildet. Da der Korndurchmesser dieser Stützschicht größer als die Schlitzweite der dargestellten Düse sein muß, ergeben sich bei der Wahl von großen Schlitzweiten durch die notwendige Kornabstufung hin zum feinen Filterkorn noch höhere Stützschichten. Die Anordnung einer abgestuften Stützschicht hat daher den Nachteil, daß sie zusätzliches Bauvolumen in Anspruch nimmt. Dadurch wird der durch die Vergrößerung des Ringspaltes erzielte Vorteil weitgehend wieder aufgezehrt.

Bei einem Filter gemäß CH-A-232 136 ist das den Filterboden durchdringende Rohr mit einem Kranz von senkrechten Schlitzen versehen und durch einen flachen Hut abgedeckt, dessen Rand seitlich weit übersteht. Unter diesem Rand soll das Filterkorn eine zum Rohr hin abfallende, unterhalb der Schlitze endende Böschung bilden. Dadurch soll verhindert werden, daß das Filterkorn an die Schlitze herankommt.

Der Erfindung liegt die Aufgabe zugrunde, ein Filter der im Oberbegriff des Patentanspruchs 1 angegebenen Gattung so auszubilden, daß der Ringspalt sich nicht zusetzen kann, daß der Druckverlust bei der Rückspülung verkleinert wird, daß die Rückspülung mit Rohwasser ermöglicht wird und daß kein zusätzliches Bauvolumen benötigt wird.

Diese Aufgabe wird durch die im Kennzeichen des Anspruchs 1 angegebenen Merkmale gelöst.

Bei der Bemessung des Ringspaltes gemäß Anspruch 1 wird bewußt zugelassen, daß das anliegende Filtermaterial unter den Rand der Haube vordringt, indem es eine Böschung bildet. Jedoch ist der freie Strömungsquerschnitt unter der Haube so groß bemessen, daß die während des Filtervorgangs bestehende, nach oben gerichtete Wassergeschwindigkeit unter der Haube kleiner ist als die Sinkgeschwindigkeit des kleinsten Korndurchmessers des anliegenden Filtermaterials. Die Strecke, in der das Wasser mit geringer Geschwindigkeit aufwärts strömt, ist genügend groß, um mitgerissenen kleinen Teilchen das Wiederabsitzen zu ermöglichen.

Vorzugsweise soll der Ringspalt sogar die in Anspruch 2 angegebene Mindesthöhe haben.

Gemäß Anspruch 3 wird noch besser erreicht, daß die aufwärts gerichtete Strömungskomponente im inneren Strömungsbereich der Düsenhaube ausreichend klein ist.

Vorteilhafte konstruktive Ausgestaltungen sind in den Ansprüchen 4 und 5 angegeben.

Die Zeichnung soll zur Erläuterung der Erfindung anhand von Ausführungsbeispielen dienen.

Fig. 1 zeigt schematisch ein komplettes Filter.

Fig. 2 zeigt eine Einzelheit aus Fig. 1 in vergrößertem Maßstab.

Fig. 3 zeigt ein anderes Ausführungsbeispiel in einer Darstellung entsprechend Fig. 2.

Fig. 4 zeigt ausschnittsweise ein anderes Ausführungsbeispiel des Filters.

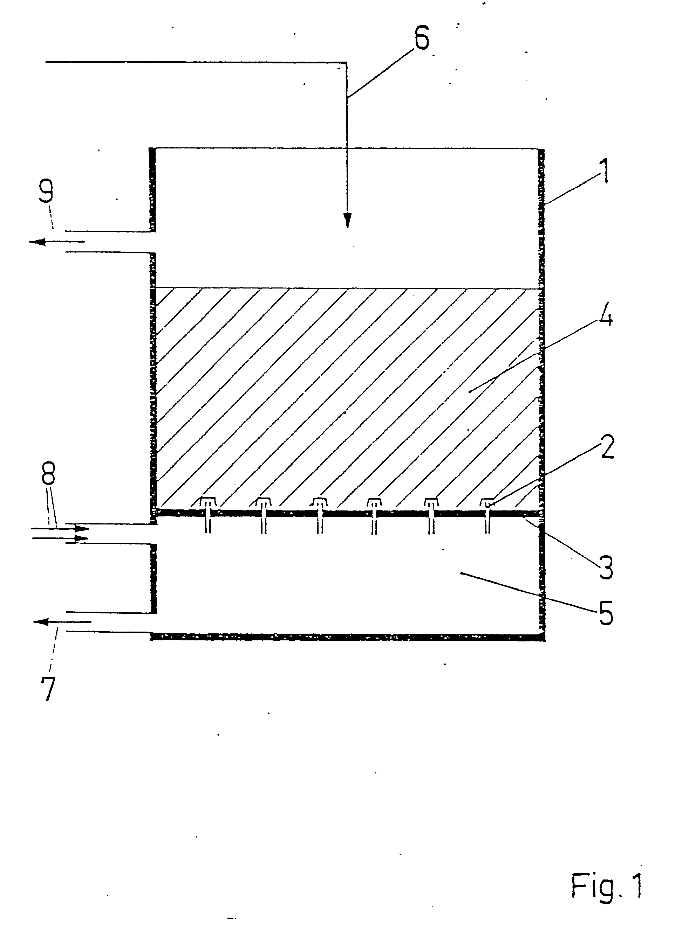

Gemäß Fig. 1 ist in einem Gehäuse 1 ein mit Düsen 2 bestückter Filterboden 3 angeordnet. Es sind z. B. 60 bis 80 Düsen/m² Bodenfläche vorgesehen. Auf dem Filterboden 3 ruht ein Filterbett 4, das aus einem Filtermaterial gleicher Korngröße besteht. Unter dem Filterboden 3 befindet sich der Filtratraum 5.

Im normalen Filtrationsbetrieb wird das Rohwasser durch einen Einlauf zugeführt, der durch einen Pfeil 6 angedeutet ist. Das Reinwasser wird gemäß Pfeil 7 aus dem Filtratraum 5 abgeführt. Beim Rückspülen wird gemäß Doppelpfeil 8 Spülwasser und Druckluft unter dem Filterboden 3 eingelassen und gemäß Pfeil 9 Schlammwasser abgeführt. Insoweit entspricht das Filter dem herkömmlichen Stand der Technik.

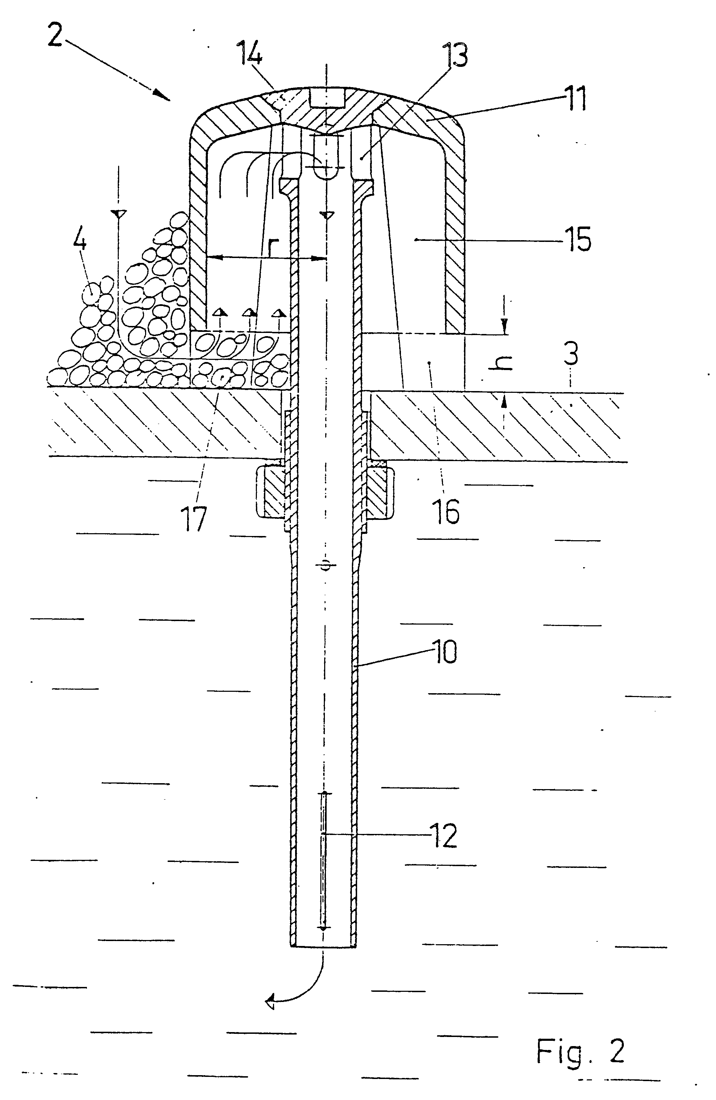

Die Düse 2 besteht bei dem in Fig. 2 dargestellten Ausführungsbeispiel aus einem dünnwandigen Rohr 10 und einer Haube 11. Das Rohr 10 sitzt dicht in einer Bohrung des Filterbodens 3, der in diesem Falle als Stahlplatte ausgeführt ist. Der untere, in den Filtratraum 5 hineinragende Teil des Rohres 10 ist etwa in seinem unteren Drittel mit langen, schmalen Lufteinlaßschlitzen 12 versehen und an seinem unteren Ende offen. Der nach oben aus dem Filterboden 3 herausragende Teil des Rohres 10 weist vier seitliche Durchlaßöffnungen 13 auf, die im Bereich des etwas erweiterten oberen Rohrendes auf dem Umfang verteilt und durch schmale Stege voneinander getrennt sind. Ihre lichte Höhe entspricht etwa dem inneren Durchmesser des Rohres 10. Unmittelbar darüber ist das Rohr 10 mit einem geschlossenen Kopf 14 versehen, der nach Art einer Senkkopfschraube konisch verbreitert ist. Der Kopf 14 sitzt in einer entsprechenden Ausnehmung der Haube 11, die auf diese Weise fest an dem Filterboden 3 verankert ist.

Die Haube 11 hat etwa die Form eines umgedrehten Bechers mit einem zylindrischen Mantel und einem leicht gewölbten Bodenteil. Dieser ist mit einer mittigen Bohrung versehen, durch die das Rohr 10 hineingesteckt ist. Der zylindrische Mantel umschließt koaxial das Rohr 10. Im Innern der Haube 11 sind in gleichmäßigen Winkelabständen drei Distanzelemente 15 in Form von Rippen vorgesehen, die unten aus der Haube 11 hervorstehen. Mit diesen Rippen ist die Haube 11 auf dem Filterboden 3 abgestützt. Dadurch ergibt sich zwischen dem unteren Rand der Haube und dem Filterboden 3 ein Ringspalt 16 von genau festgelegter Höhe h, der durch die herausstehenden Enden der Rippen unterbrochen ist. Die Höhe h des Ringspaltes 16 verhält sich zu dem Durchmesser der größten Körner des anliegenden Filtermaterials 17 wie etwa 3 : 1 bis 5 : 1. Als Radius r des Ringspaltes 16 wird der Radius des inneren unteren Haubenrandes bezeichnet. Aus h und r ergibt sich die Größe der zylindrischen Durchtrittsfläche des Ringspaltes 16.

Der zwischen dem Rohr 10 und der zylindrischen Innenfläche der Haube 11 verbleibende ringförmige lichte Querschnitt ist etwa gleich der zylindrischen Durchtrittsfläche des Ringspaltes 16. Die Höhe, gemessen vom unteren Rand der Haube 11 bis zu den Durchlaßöffnungen 13 ist etwas größer als der Innenradius der Haube 11, d. h. als der Radius r des Ringspaltes 16. Man erkennt auch, daß der Innendurchmesser des Rohres 10 etwa gleich der Höhe h des Ringspaltes 16 ist.

Das erfindungsgemäße Filter arbeitet folgendermaßen: Während des Filtrationsvorganges strömt das filtrierte Wasser, wie durch Pfeile veranschaulicht, in radialer Richtung durch den Ringspalt 16 in die Düse 2 ein. Da die Höhe h größer ist als die maximale Korngröße des anliegenden Filtermaterials 17, bildet eine geringe Menge des Filtermaterials 17 unter dem Rand der Haube 11 eine zum Innern der Düse 2 abfallende Böschung. Das eingeströmte Wasser wird senkrecht nach oben umgelenkt, wobei seine Strömungsgeschwindigkeit sprunghaft abnimmt. Dieser Geschwindigkeitssprung wird dadurch erreicht, daß dem Wasserstrom plötzlich ein vergrößerter Querschnitt zur Verfügung steht. Denn beim Durchströmen des Ringspaltes 16, der durch die Böschung verschüttet ist, verbleiben als Strömungsquerschnitt lediglich die zwischen den Körnern befindlichen Zwischenräume, die insgesamt schätzungsweise höchstens ein Drittel der Fläche des Ringspaltes 16 ausmachen. Das aus der Böschung austretende Wasser findet dagegen einen Querschnitt vor, der der Fläche des Ringspaltes 16 annähernd gleich ist. Dementsprechend verringert sich seine Geschwindigkeit auf etwa ein Drittel. Mit dieser verringerten Geschwindigkeit strömt es aufwärts bis zu den Durchlaßöffnungen 13. Hierbei ist seine Geschwindigkeit niedriger als die Sinkgeschwindigkeit der kleinsten Körner des Filtermaterials 17, d. h. niedriger als die minimale Sinkgeschwindigkeit. Etwaige beispielsweise durch kleine Wirbel mitgerissene Körner haben genügend Zeit, um sich wieder abzusetzen. Daher ist es ausgeschlossen, daß Filterkörner durch die Durchlaßöffnungen 13 und das Rohr 10 in den Filtratraum 5 gelangen.

Beim Rückspülen wird zunächst Druckluft in den Filtratraum eingeblasen. Sie sammelt sich unter dem Filterboden 3 unter Verdrängung eines entsprechenden Wasservolumens und läßt die Oberfläche des Wassers bis auf die Höhe der Lufteinlaßschlitze 12 absinken. Weiter zugeführte Druckluft entweicht durch die Lufteinlaßschlitze 12 und gelangt zusammen mit dem gleichzeitig als Spülwasser zugeführten Rohwasser durch das Rohr 10 und die Durchlaßöffnungen 13 in das Innere der Haube 11. Dort strömt das Wasser-Luft-Gemisch vertikal nach unten, dringt in die Böschung ein und verläßt mit sprunghaft vergrößerter Geschwindigkeit die Düse 2 durch den Ringspalt 16. Es konnte beobachtet werden, daß durch die erhöhte Geschwindigkeit des während des Filtrationsvorganges eingetragene Filtermaterial 17 beim Rückspülen wieder nach außen zurücktransportiert wurde.

Durch diese Vorgänge, die sich bei jedem Zyklus wiederholen, wird der Ringspalt 16 nachhaltig von Verunreinigungen freigehalten. In ausführlichen Versuchsreihen wurde auch gefunden, daß grobe Verunreinigungen des Spülwassers, wie Tannennadeln, Blätter, kleine Steinchen o. dgl. beim Rückspülvorgang das Rohr 10, die Durchlaßöffnungen 13 sowie den Ringspalt 16 ungehindert passieren konnten, ohne daß hierdurch die Funktion gestört wurde.

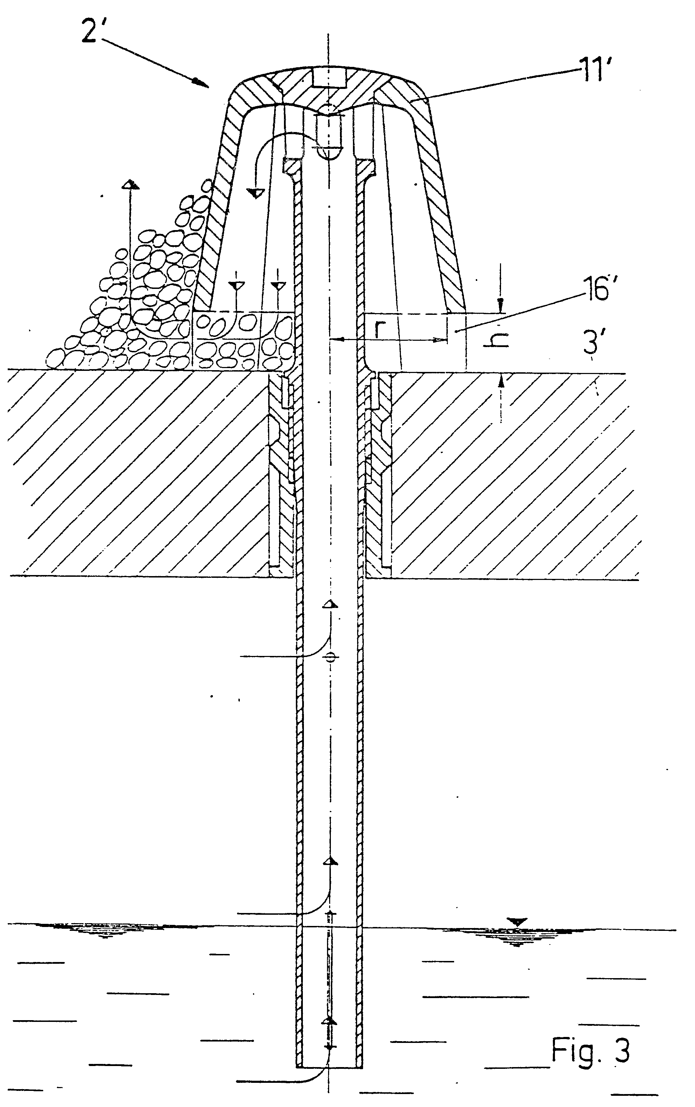

Bei dem abgewandelten Ausführungsbeispiel gemäß Fig. 3 besteht der Filterboden 3' aus Beton. Dementsprechend sind die Befestigungs- und Dichtungselemente, mit denen die Düsen 2' in den Öffnungen des Filterbodens 3' sitzen, gegenüber dem in Fig. 2 dargestellten Ausführungsbeispiel geändert. Die Haube 11' hat die Form eines abgestumpften Kegels. Am unteren Rand ist der Durchmesser genauso groß wie bei der Ausführung gemäß Fig. 2. Nach oben hin nimmt der Durchmesser zwar etwas ab. Der freie Querschnitt ist aber, vom unteren Rand der Haube 11' gemessen bis zu einer Höhe, die etwa dem Radius des inneren unteren Haubenrandes, d. h. dem Radius r des Ringspaltes 16' entspricht, größer als die halbe Fläche des Ringspaltes 16'. Durch diese Formgebung ist also auf jeden Fall gewährleistet, daß beim Filtrieren die Geschwindigkeit des aufwärts strömenden Wassers auf einer ausreichenden Strecke kleiner ist als die Geschwindigkeit, mit der das Wasser im Bereich des Ringspaltes 16' durch die Böschung strömt. Die Pfeile veranschaulichen die Strömung während des Rückspülvorganges.

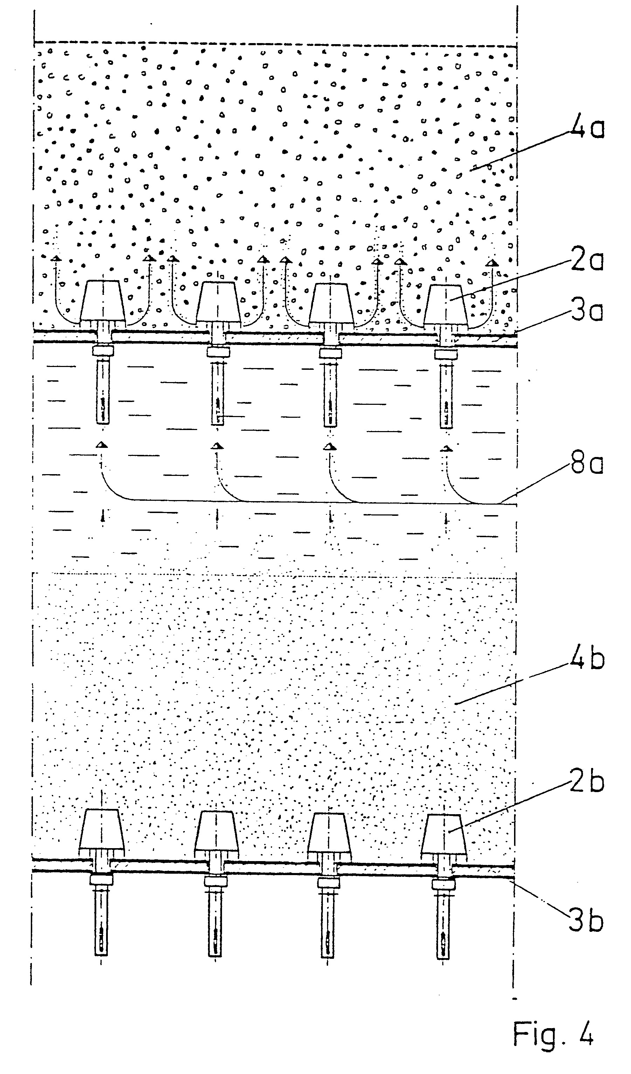

In Fig. 4 ist ausschnittsweise ein zweistufiges Filter dargestellt. Dabei ist ein erstes Filterbett 4a mit Filterboden 3a über einem zweiten Filterbett 4b mit Filterboden 3b angeordnet. Das Filterbett 4a besteht aus Sand, das Filterbett 4b aus sehr leichter körniger Aktivkohle. Wenn bei einer derartigen Filterkombination nicht aufwendige Vorkehrungen getroffen werden, ist es beim Rückspülen des oberen Filterbettes 4a unvermeidlich, daß die Aktivkohle des unteren Filterbettes 4b aufgewirbelt und mit dem Spülwasser in die Düsen 2a des oberen Filterbettes 4a gelangt. Um dies zu veranschaulichen, ist in Fig. 4 in der Umgebung der Pfeile 8a, die die Strömung des Rückspülmediums symbolisieren, feinkörniges Material angedeutet. Im Gegensatz zu herkömmlichen Filtern, bei denen die engen Ringspalte oder Düsenschlitze sich während des Rückspülvorganges erfahrungsgemäß in kurzer Zeit zusetzen, hat sich das erfindungsgemäße Filter bei diesem äußerst schwierigen Anwendungsfall bestens bewährt. Die mitgeführte Aktivkohle wurde teilweise durch den Ringspalt der Düsen 2a in das Filterbett 4a eingetragen und sammelte sich teilweise in den weiten Hohlräumen der Düsen 2a. Bei Wiederaufnahme des Filterbetriebes wurde diese Aktivkohle ohne Schwierigkeit mit dem Filtrat der ersten Stufe wieder ausgetragen und zu dem Filterbett 4b zurückgeführt. Eine Beeinträchtigung der Funktion wurde über viele Zyklen hinweg weder beim Rückspülen noch beim anschließenden Filtrieren beobachtet.

## Patentansprüche

1. Rückspülbares Filter mit einem Gehäuse (1), das in seinem unteren Teil einen Filtratraum und in seinem oberen Teil ein auf einem Filterboden (3, 3') ruhendes Bett (4) aus körnigem Filtermaterial aufweist, wobei der Filterboden (3, 3') mit Düsen (2, 2') bestückt ist, bestehend aus je einem Rohr (10), das den Filterboden (3, 3') durchdringt und an seinem oberen Ende mit Abstand vom Filterboden (3, 3') mindestens eine Durchlaßöffnung aufweist, und aus einer becherförmigen Haube (11, 11'), die das aus dem Filterboden (3, 3') herausragende Ende des Rohres (10) unter Bildung eines Ringspaltes (16, 16') zwischen dem unteren Haubenrand und dem Filterboden (3, 3') abdeckt, dadurch gekennzeichnet, daß die Höhe h des Ringspaltes (16, 16') größer ist als der größte Korndurchmesser des anliegenden Filtermaterials (17) und daß der ringförmige Querschnitt zwischen dem Rohr (10) und der Innenfläche der Haube (11, 11') bis mindestens zu einer dem Radius r des Ringspaltes (16, 16') entsprechende Höhe — gemessen vom unteren Haubenrand — mindestens halb so groß ist wie die Fläche des Ringspaltes (16, 16'), wobei der Radius r und die Fläche des Ringspaltes (16, 16') am inneren unteren Rand der Haube (11, 11') gemessen sind.

2. Filter nach Anspruch 1, dadurch gekennzeichnet, daß die Höhe h des Ringspaltes (16, 16') mindestens dreimal so groß ist wie der größte Korndurchmesser des anliegenden Filtermaterials (17).

3. Filter nach Anspruch 1 oder 2, dadurch gekennzeichnet, daß der ringförmige Querschnitt zwischen dem Rohr (10) und der Innenfläche der Haube (11, 11') am unteren Rand mindestens so groß ist wie die Fläche des Ringspaltes (16, 16').

4. Filter nach einem der Ansprüche 1 bis 3, dadurch gekennzeichnet, daß die Höhe h des Ringspaltes (16, 16') durch mindestens drei auf dem Filterboden (3, 3') aufliegende Distanzelemente (15) festgelegt ist.

5. Filter nach einem der Ansprüche 1 bis 4, dadurch gekennzeichnet, daß das Rohr (10) durch eine mittige Bohrung im Boden der Haube (11, 11') hindurch gesteckt ist und einen verbreiterten Kopf (14) aufweist, der in einer entsprechenden Ausnehmung der Haube (11, 11') sitzt.

## Claims

1. Backwashable filter comprising a housing (1) which in its lower part has a filtrate chamber and in its upper part a bed (4) of granular filtering agent resting on a filter bottom (3, 3'), the filter bottom (3, 3') being furnished with nozzles (2, 2') consisting each of a tube (10) penetrating the filter bottom (3, 3') and having at least one through opening at its upper end at a distance from the filter bottom (3, 3') and of a cup-like hood (11, 11') covering the end of the tube (10) standing out of the filter bottom (3, 3') and forming an annular space (16, 16') between the lower edge of the hood and the filter bottom (3, 3') characterized by the height h of the annular space (16, 16') being larger than the particle diameter of the adjacent filtering agent (17) and the annular cross section between the tube (10) and the inner surface of the hood (11, 11') being at least half the size of the annular space surface (16, 16') — as measured from the lower edge of the hood — the radius r and the annular slot surface (16, 16') being measured from the inner lower edge of the hood (11, 11').

2. A filter according to 1, characterized by the height h of the annular space (16, 16') being at least three times the size of the largest particle diameter of the adjacent filtering agent (17).

3. A filter according to 1 or 2, characterized by the annular cross section between the tube (10) and the inner surface of the hood (11, 11') at its lower edge being at least the size of the surface of the annular space (16, 16').

4. A filter according to 1–3, characterized by the height h of the annular space (16, 16') being permanently fixed by at least three spacers (15) placed on the filter bottom (3, 3').

5. A filter according to 1–4, characterized by the tube (10) penetrating a central bore hole in the bottom of the hood (11, 11') and having a flared head (14) fitted into a proper cutout in the hood (11, 11').

## Revendications

1. Filtre de rinçage à contre-courant comportant un carter (1) qui présente dans sa partie inférieure une chambre à filtrat et, dans sa partie supérieure, un lit (4) en matière filtrante granulaire reposant sur un fond (3, 3'), ledit fond (3, 3') étant garni de buses (2, 2') comprenant chacune un tube (10) qui, traversant ledit fond (3, 3'), possède à son extrémité supérieure au moins un orifice de passage ménagé à distance dudit fond (3, 3'), ainsi qu'un dôme (11, 11') qui, en forme de coupe, recouvre l'extrémité dudit tube (10) saillant au-delà dudit fond (3, 3') en délimitant un intervalle annulaire (16, 16') entre le bord inférieur dudit dôme et ledit fond (3, 3'), filtre caractérisé par le fait que la hauteur (h) dudit intervalle annulaire (16, 16') est plus grande que le plus grand diamètre des grains de la matière filtrante (17) adjacente; et par le fait que la section annulaire entre le tube (10) et la face interne de la paroi du dôme (11, 11') jusqu'à au moins une hauteur correspondant au rayon (r) de l'intervalle annulaire (16, 16') — mesurée à partir du bord inférieur du dôme — est au moins aussi grande que la moitié de la surface dudit intervalle annulaire (16, 16'), ledit rayon (r) et la surface dudit intervalle annulaire (16, 16') étant mesurés au bord interne inférieur dudit dôme (11, 11').

2. Filtre selon la revendication 1, caractérisé par le fait que la hauteur (h) de l'intervalle annulaire (16, 16') est au moins égale au triple du plus grand diamètre des grains de la matière filtrante (17) adjacente.

3. Filtre selon la revendication 1 ou 2, caractérisé par le fait que la section annulaire entre le tube (10) et la face interne de la paroi du dôme (11, 11') au bord inférieur est au moins aussi grande que la surface de l'intervalle annulaire (16, 16').

4. Filtre selon l'une des revendications 1 à 3, caractérisé par le fait que la hauteur (h) de l'intervalle annulaire (16, 16') est déterminée par au moins trois organes d'espacement (15)

9          **0 026 270**

reposant sur le fond (3, 3') dudit filtre.

5. Filtre selon l'une des revendications 1 à 4, caractérisé par le fait que le tube (10) est emboîté dans un trou central du fond du dôme (11, 11') et présente une tête élargie (14) qui est logée dans un évidement correspondant dudit dôme (11, 11').

6

Fig. 1

Fig. 2

Fig. 3

4a

2a

3a

8a

4b

2b

3b

Fig. 4